# EUROPEAN PATENT APPLICATION

(11) **EP 3 330 397 A1**
(43) Date of publication of application: **06.06.2018**
(21) Application number: 16830094.5
(22) Date of filing: 16.03.2016
(51) Int. Cl.: C22C 38/00, B22C 9/22, C22C 38/16

(54) **CAST STEEL MATERIAL**

(30) Priority: 30.07.2015 JP 2015150639
(71) Applicant: Kabushiki Kaisha Riken, Chiyoda-ku, Tokyo 102-8202 (JP)
(72) Inventor: Anang Cakrawala, Kashiwazaki-shi Niigata 945-8555 (JP); TSUCHIYA Taito, Kashiwazaki-shi Niigata 945-8555 (JP)
(74) Representative: Weickmann & Weickmann PartmbB
(86) International application number: PCT/JP2016/058279
(87) International publication number: WO 2017/017989

(57) **Abstract**

A cast steel member, comprising: 0.10 to 1.00% of C, greater than 0.7% to 2.0% or less of Si, 0.3 to 2.0% of Mn, 2.0% or less of Cu, residual Fe and inevitable impurities, as represented by weight%, wherein Si (%) <= C (%)×10.

## Description

### Field of the Invention

The present invention relates to a cast steel member, and, more particularly, to a cast steel member suitably applied to an undercarriage such as a steering knuckle of a vehicle.

### Description of the Related Art

In recent years, in order to address environmental issues, it is desirable to improve fuel efficiency of a vehicle, to downsize, and to reduce the weight of whole vehicle parts. For example, an FCD (Ferrum Casting Ductile) cast iron material, a ferrous material, and a forge steel material have been widely used for undercarriages of a vehicle in the related art. In order to downsize and reduce weight of the parts made of these materials, it is desirable to increase a strength. Incidentally, the ferrous material and the forge steel material relatively easily acquire have rigidity, toughness, and a strength, but the shapes to be formed or worked of the ferrous material and the forge steel material are limited. It is therefore difficult to decrease the thickness, downsize, and significantly reduce the weight.

On the other hand, cast steel having a higher strength than cast iron is focused attention as a structural material. For example, cast steel having an improved tensile strength of 1000 MPa has been developed (Patent Literature 1).

### Prior Art Literature

### Patent Literature

[Patent Literature 1] Japanese Examined Patent Publication No. 2008-7820

### Summary of the Invention]

### Problems to be solved by the Invention

Incidentally, cast steel is easily damaged and has a large internal stress (residual stress) as compared to cast iron. Material properties, in particular, a fatigue strength and an impact value, of cast steel are lowered. Cast steel may be broken at the time of use, and is, in fact, scarcely applied to the undercarriages of the vehicle. In particular, the thicker the cast steel is, the easily a shrinkage cavity and a gas defect are generated. Further, in order to uniform a cast steel structure (segregation and coarsened structure), to remove the internal force, and to stabilize the structure, a heat treatment is necessary, which may increase the costs.

On the other hand, FCD cast iron is frequently used for the undercarriages of the vehicle. However, if the strength of the FCD is increased to about more than 1000 MPa, there is a tendency that elongation (ductility) and an impact value (toughness) are significantly decreased. Not only the ductility and the toughness, but also the rigidity (the Young's modulus) of the cast iron is lower than cast steel. (Cast iron has rigidity of 170 to 180 GPa, and cast steel has rigidity of 190 to 210 GPa). Accordingly, even if it is tried to ensure the rigidity and the ductility required by the undercarriages of the vehicle by using the cast iron, there is a limit to decrease the thickness. Therefore, there is a problem that the weight cannot be significantly decreased.

The present invention solves the above-mentioned problems, and has an object to provide a cast steel member having an excellent strength and toughness and being capable of decreasing the thickness and reducing the weight.

### Means for Solving the Problems

In order to solve the above-mentioned problems, through intense studies by the present inventors, it has been found that both of the strength and the toughness can be improved by setting cast steel to have a predetermined composition. In particular, when the steel is cast with a minimum thickness being 10 mm or less, the strength and the toughness can be certainly improved.

The present invention provides a cast steel member, comprising: 0.10 to 1.00% of C, greater than 0.7% to 2.0% or less of Si, 0.3 to 2.0% of Mn, 2.0% or less of Cu, residual Fe and inevitable impurities, as represented by weight%, wherein Si (%) <= C (%)×10.

Preferably, the cast steel member comprises: 0.15 to 0.40% of C, 1.1% to 2.0% of Si, 0.5 to 1.5% of Mn, 0.5 to 1.5% of Cu, residual Fe and inevitable impurities, as represented by weight%.

Preferably, an impact value (normal temperature) of the cast steel member is 15 J/cm² or more, a tensile strength is 680 MPa or more to less than 1000 MPa, a 0.2% yield strength is 450 MPa or more, and an elongation is 12% or more.

Preferably, the cast steel member has a minimum thickness of 10 mm or less.

Preferably, the cast steel member has a minimum thickness of 1 to 6 mm or less.

Preferably, the cast steel member is as-cast.

Preferably, the cast steel member is for an undercarriage.

Preferably, the cast steel member is formed into a steering knuckle.

### Effects of the Invention

According to the present invention, there is provided a cast steel member having excellent strength and toughness and being capable of decreasing the thickness and reducing the weight.

### Brief Description of the Drawings

[Fig. 1] A sectional perspective view showing a mold for producing Examples.
[Fig. 2] A view showing a size of a tensile test piece for measuring a tensile strength in Examples and Comparative Examples.
[Fig. 3] A view showing a size of an impact test piece for measuring an impact value in Examples and Comparative Examples.
[Fig. 4] A view showing an example of applying a cast steel member of the present invention to a steering knuckle.

### Description of the Embodiments

Hereinafter, embodiments according to the present invention will be described. In the context of the present invention, "%" denotes "weight %" unless otherwise specified.

The cast steel member according to the embodiment of the present invention includes 0.10 to 1.00% of C, greater than 0.7% to 2.0% or less of Si, 0.3 to 2.0% of Mn, 2.0% or less of Cu, residual Fe and inevitable impurities, as represented by weight%, in which Si (%) <= C (%)×10.

### <Composition>

C (carbon) significantly increases a tensile strength and a yield strength and decreases elongation and an impact value with respect to cast steel. If the C content is less than 0.10%, there are no effects to increase the yield strength and the tensile strength. If the C content is greater than 1.00%, the cast steel becomes hard and brittle, and the impact value is decreased. Accordingly, the C content is set to from 0.10 to 1.00%.

In particular, it is preferable that if the C content be set to from 0.15 to 0.40%, the tensile strength and the rigidity can be improved without decreasing the impact value.

Si can reinforce ferrite, restrain the reduction of the elongation, and improve the yield strength, but coarsen crystal grain and decrease the impact value. If the Si content is 0.7% or less, the yield strength is not sufficiently increased. If the Si content is greater than 2.0%, the impact value is decreased. Accordingly, the Si content is set to greater than 0.7% to 2.0% or less.

In particular, if the Si content is set to 1.1% or more to 2.0% or less, the yield strength (fatigue strength) can be further improved.

In addition, if Si (%) <= C (%)×10, the percentage of Si and C contained in molten metal becomes appropriate, less gas defect is generated, a stable mold is formed, both of the impact value and the tensile strength are improved, and impact properties (normal temperature) can be certainly 15 J/cm² or more. On the other hand, if Si and C do not satisfy the above-described relationship, the gas defect is easily generated, and it is difficult to produce a normal mold product by melting in the air.

Mn is an element that promotes providing a matrix structure with a strong pearlite structure and makes crystal grain finer. While the impact value is prevented from decreasing, the tensile strength is significantly increased. However, Mn decreases the elongation. If the Mn content is less than 0.3%, an effect to increase the strength is insufficiently provided. If the Mn content is greater than 2.0%, the elongation is significantly decreased. Accordingly, the Mn content is set to from 0.3 to 2.0%.

In particular, it is preferable that if the Mn content be set to from 0.50 to 1.50%, the yield strength (fatigue strength) can be further improved.

Cu is highly effective to make crystal grain finer and dissolve into ferrite. While the elongation and the impact value are prevented from decreasing, the yield strength (fatigue strength) is especially improved. If the Cu content is greater than 2.0%, the structure other than ferrite is precipitated, which significantly embrittles the structure and cracking during manufacture easily occurs. Accordingly, the Cu content is set to 2.0% or less.

In particular, it is preferable that if the Cu content be set to from 0.5 to 1.50%, it be highly effective to make crystal grain finer, the elongation and the impact value be prevented from decreasing, and the yield strength (fatigue strength) and the tensile strength can be improved.

The Fe content is preferably 95% or more. Examples of inevitable impurities include P, S, Ni, Cr, and Al. In particular, Al can be added as a deoxidizer. In order to prevent the gas defect upon casting, the oxygen content is preferably controlled to 80 ppm by weight or less based on the total oxygen content.

### <Minimum thickness>

Preferably, the cast steel member according to the embodiment of the present invention is cast to have a minimum thickness of 10 mm or less. In a conventional cast steel, the thicker the cast steel is, the easier the shrinkage cavity and the gas defect occur. In addition, a heat treatment is performed to homogenize segregation and the coarsened structure, to remove an internal stress, and to stabilize the structure. If no heat treatment is applied, the material properties such as the impact value and the fatigue strength are deteriorated. In particular, it is difficult to apply to a vehicle (undercarriages).

The cast steel having the above-described composition and the minimum thickness of 10 mm or less was cast. The internal stress was decreased by finer crystal grain, and the fatigue strength was successfully improved even though no heat treatment was applied. Herein, the minimum thickness refers to a minimum thickness of an as-cast product, and does not include a thickness of a cast product that is originally thick and ground later. In this case, as the as-cast product leaves a casting surface (excluding dam and deburr), the as-cast product can be distinguished from the ground cast product.

In particular, the cast steel is preferably cast to have the minimum thickness of 1 to 6 mm.

As described above, since the cast steel member according to the embodiment of the present invention has the improved fatigue strength even though no heat treatment is performed after casting, the cast steel can be used as-cast product.

The cast steel member according to the embodiment of the present invention preferably has an impact value of 15 J/cm² or more at normal temperature, a tensile strength of 680 MPa or more to less than 1000 MPa, a 0.2% yield strength of 450 MPa or more, and an elongation of 12% or more.

In addition, the cast steel member according to the embodiment of the present invention has the Young's modulus of 190 to 210 GPa and can achieve the Young's modulus higher than the Young's modulus (about 166 GPa) of the FCD cast iron material.

Note that the tensile strength is an index of evaluating the "strength", the 0.2 % yield strength is an index of evaluating the "fatigue strength", the elongation (breaking elongation) is an index of evaluating the "ductility", the Young's modulus is an index of evaluating the "rigidity", and the impact value is an index of evaluating the "toughness".

The cast steel member according to the embodiment of the present invention can be produced by known methods. A melting furnace and a melting method are not especially limited. Also, a casting method is not especially limited as long as fluidity is satisfied, and a gravity casting method, a reduced pressure casting method, or the like may be used as necessary.

In addition, in order to prevent a shrinkage cavity defect upon casting, it is preferable that a cooling speed of each site of the mold be controlled for directional solidification. As appropriate, a chiller and a gate riser may be used. In this case, the chiller is set to the mold so as to rapidly and preferentially cool a thick site, and it can be controlled such that a final solidified site becomes the gate riser. The above-described method is preferable in that the thin cast steel member (preferably having the minimum thickness of 10 mm or less) can be stably cast.

According to the present invention, the balance between the strength and the toughness is excellent and high rigid and stable mechanical properties are provided as described above, which is suitable to decrease the weight of the vehicle parts. In particular, the present invention can be preferably used for an undercarriage (knuckle, upper arm, lower arm, brake caliper, trailing arm, bracket (brake support), etc.). In particular, when the present invention is applied to a steering knuckle that needs to have high strength and high toughness (impact properties), both of the strength and the rigidity are improved, and the parts can have a further light weight as compared with the material having only the improved strength is applied.

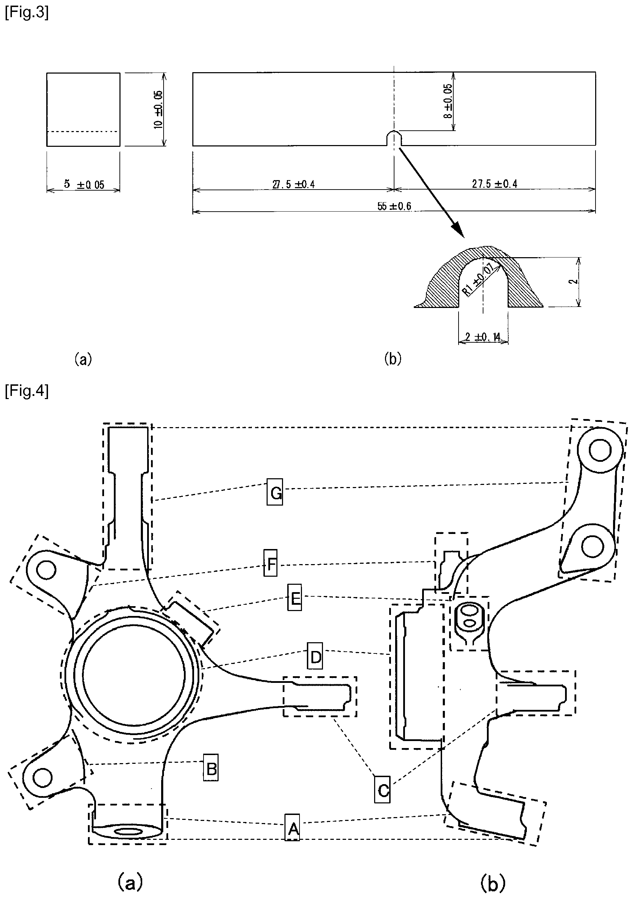

Fig. 4 shows an example of applying the cast steel member of the present invention to a steering knuckle. Fig. 4 (a) and (b) each is a plan view and a side view of a steering knuckle 100.

Note that the sites shown by the symbols A to G are portions (holes) connecting to other parts, need working to match with the connection positions, and are therefore not as-cast. Accordingly, the minimum thickness of the steering knuckle 100 is of the as-cast site excluding the sites shown by the symbols A to G.

### Example

### <Casting>

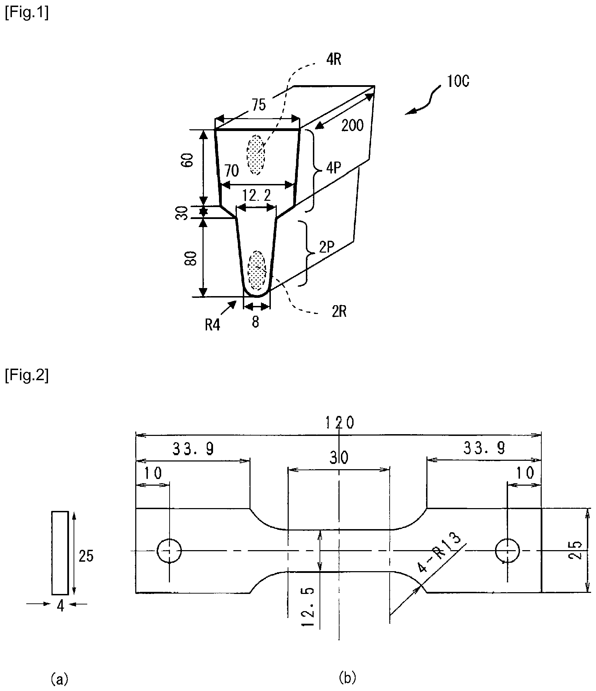

100 kg of cast steel having each component composition shown in Table 1 was melted in a high frequency melting furnace, a deoxidizer was added thereto such that the total oxygen content was 80 ppm by weight or less to prepare molten metal. A Y-shaped block mold (see Fig. 1) molded by a beta set method was provided with a chiller and a gate riser for directional solidification. The molten metal was casted into the mold to cast cast steel 10C.

As shown in Fig. 1, the cast steel 10C had a bottom portion 2P having a thickness of 10 mm or less and a wide and thick upper portion 4P having a thickness of greater than 10 mm. The structure in each Example included ferrite and pearlite as main components (total of both components occupies 60% or more of cast steel).

### <Test piece>

The cast steel 10 was not heat-treated and as-casted. A tensile test piece and an impact test piece having a size shown in Fig. 2 and Fig. 3 in each of Examples and Comparative Examples were produced by a turning process. The tensile test piece was in accordance with JIS Z2242 and the impact test piece was a U-notched impact test piece in accordance with JIS Z2242. A cube having 10 mm on a side was cut out from the cast steel 10C, and the Young's modulus test piece was produced.

Note that each test piece was produced from an area 2R of the bottom portion 2P of the cast steel 10 in each of Examples and Comparative Examples 1, 2, 4 to 6, and the test piece was produced from an area 4R of the upper portion 4P of the cast steel 10 in Comparative Example 3. A unit of the numerical values in Fig. 1 to Fig. 3 is mm. Fig. 2(a) and Fig. 3 (a) each shows a cross-sectional view of the test piece, and Fig. 2 (b) and Fig. 3 (b) each shows a plan view of the test piece. In Fig. 3 (b), a partial enlarged view of a U-notch is pointed by an arrow.

### <Evaluation>

The following items are evaluated.

Tensile strength, 0.2% yield strength, and breaking elongation: The tensile test was performed on each tensile test piece in accordance with JIS Z2241 using the Amsler universal testing machine to measure the tensile strength, the 0.2% yield strength, and the breaking elongation.

Young's modulus: The density of the Young's modulus test piece was measured by the Archimedes method. A longitudinal wave sound speed and a transversal wave sound speed were measured by an ultrasonic pulse method. From these values, the Young's modulus was calculated. As a measurement apparatus for the ultrasonic pulse method, "digital ultrasonic flaw detector UI-25" (product name) manufactured by Ryoden Shonan Electronics Corporation was used. An oscillator for longitudinal and transverse waves manufactured by Eishin Kagaku Co., Ltd. was used.

Impact value: The impact test was performed on the impact test piece in accordance with JIS Z2242 using the Charby impact tester (50J) to measure the impact value at normal temperature (25°C).

Table 1 shows the results.

**[Table 1]**

| | Component of cast steel [wt%] | | | | | | | | | | Young's modulus [GPa] | 0.2% yield strength [MPa] | Tensile stre ngth [MPa] | Elongation [%] | Impact value (normal temp) [J/cm2] |
|---|---|---|---|---|---|---|---|---|---|---|---|---|---|---|---|
| | C | Si | Mn | P | S | Cr | Ni | Cu | Al | Relationship between Si(%) and C(%) | | | | | |
| Example 1 | 0.25 | 1.00 | 1.00 | 0.020 | 0.008 | 0.031 | 0.02 | 0.038 | 0.034 | Si(%)<C(%) × 10 | 208 | 451 | 698 | 16.1 | 16.9 |
| Example 2 | 0.20 | 1.50 | 0.80 | 0.020 | 0.008 | 0.031 | 0.02 | 0.031 | 0.025 | Si(%)<C(%) × 10 | 208 | 455 | 705 | 18.2 | 16.3 |
| Example 3 | 0.40 | 1.00 | 0.60 | 0.020 | 0.008 | 0.031 | 0.02 | 0.031 | 0.025 | Si(%)<C(%) × 10 | 205 | 451 | 715 | 15.4 | 18.2 |
| Example 4 | 0.21 | 1.00 | 0.35 | 0.019 | 0.008 | 0.033 | 0.02 | 0.03 | 0.029 | Si(%)<C(%) × 10 | 202 | 450 | 680 | 19.0 | 16.0 |
| Example 5 | 0.20 | 1.00 | 1.95 | 0.019 | 0.008 | 0.031 | 0.02 | 0.03 | 0.033 | Si(%)<C(%) × 10 | 200 | 460 | 710 | 12.2 | 15.5 |
| Example 6 | 0.40 | 2.00 | 1.00 | 0.019 | 0.008 | 0.031 | 0.02 | 0.031 | 0.035 | Si(%)<C(%) × 10 | 205 | 494 | 725 | 15.0 | 15.0 |
| Example 7 | 0.40 | 0.75 | 1.00 | 0.019 | 0.008 | 0.031 | 0.02 | 0.031 | 0.035 | Si(%)<C(%) × 10 | 205 | 452 | 708 | 15.1 | 17.8 |
| Example 8 | 1.00 | 2.00 | 1.00 | 0.019 | 0.008 | 0.031 | 0.02 | 0.031 | 0.035 | Si(%)<C(%) × 10 | 195 | 457 | 680 | 16.1 | 15.0 |
| Example 9 | 0.20 | 1.50 | 0.90 | 0.024 | 0.007 | 0.043 | 0.01 | 1.11 | 0.021 | Si(%)<C(%) × 10 | 200 | 485 | 735 | 17.5 | 16.2 |
| Example 10 | 0.21 | 1.10 | 0.95 | 0.020 | 0.008 | 0.035 | 0.02 | 1.50 | 0.025 | Si(%)<C(%) × 10 | 202 | 490 | 730 | 17.2 | 16.4 |
| Example 11 | 0.20 | 1.60 | 0.80 | 0.021 | 0.008 | 0.031 | 0.02 | 0.51 | 0.030 | Si(%)<C(%) × 10 | 205 | 485 | 730 | 17.4 | 16.0 |
| Comp-Example 1 | 0.23 | 2.50 | 0.70 | 0.019 | 0.008 | 0.031 | 0.02 | 0.031 | 0.035 | Si(%)>C(%) × 10 | 208 | 427 | 679 | 5.9 | 8.7 |
| Comp-Example 2 | 0.31 | 0.40 | 0.60 | 0.019 | 0.008 | 0.030 | 0.02 | 0.031 | 0.035 | Si(%)<C(%) × 10 | 206 | 298 | 605 | 17.1 | 66.9 |
| Comp-Example 3 | 0.23 | 2.50 | 0.70 | 0.019 | 0.006 | 0.031 | 0.01 | 0.03 | 0.025 | Si(%)>C(%) × 10 | 208 | 370 | 650 | 11.5 | 6.8 |
| Comp-Example 4 | 0.13 | 1.90 | 1.00 | 0.018 | 0.007 | 0.031 | 0.02 | 0.03 | 0.021 | Si(%)>C(%) × 10 | 208 | 349 | 610 | 7.3 | 5.8 |
| Comp-Example 5 | 1.00 | 2.00 | 0.20 | 0.019 | 0.008 | 0.031 | 0.02 | 0.031 | 0.035 | Si(%)<C(%) × 10 | 195 | 270 | 655 | 18.1 | 17.0 |
| Comp-Example 6 | 1.00 | 0.60 | 1.00 | 0.019 | 0.008 | 0.031 | 0.02 | 0.031 | 0.035 | Si(%)<C(%) × 10 | 195 | 310 | 665 | 16.1 | 25.0 |

As shown in Table 1, in each of Examples 1 to 11 containing 0.10 to 1.00% of C, greater than 0.7% to 2.0% of Si, 0.3 to 2.0% of Mn, residual Fe and inevitable impurities and cast having the minimum thickness of 10 mm or less, all of the yield strength, the strength, and the toughness were excellent.

In particular, in Examples 1 to 7, 9 to 11 containing 0.15 to 0.40% of C, the elongation and the impact value were not decreased, and the tensile strength and the rigidity were improved as compared to Example 8.

On the other hand, in Comparative Example 1 containing greater than 2.0% of Si, the impact value was significantly decreased.

In Comparative Examples 2 and 6 containing 0.7% or less of Si, the yield strength was significantly decreased.

In Comparative Examples 1 and 4 where Si (%) > C (%)x10, the elongation and the impact value were significantly lowered.

In Comparative Example 3 having the minimum thickness greater than 10 mm, the yield strength (fatigue strength), the strength, and the impact value were further lowered as compared to those in Comparative Example 1 having the same composition. It is contemplated that in the case of Comparative Example 3, the thickness is increased upon casting, the number of the internal defect is therefore increased, and segregation and the coarsened structure are generated. Accordingly, it can be concluded that the minimum thickness upon casting is preferably 10 mm or less.

In Comparative Example 5 containing less than 0.5% of Mn, the strength and the yield strength were decreased.

### Description of Reference Numerals

- 2P: bottom portion of cast steel (thin portion having thickness of 10 mm or less)
- 4P: upper portion of cast steel (thick portion having thickness of greater than 10 mm)
- 10C: cast steel
- 100: cast steel member (steering knuckle)

## Claims

1. A cast steel member, comprising:
0.10 to 1.00% of C, greater than 0.7% to 2.0% or less of Si, 0.3 to 2.0% of Mn, 2.0% or less of Cu, residual Fe and inevitable impurities, as represented by weight%, wherein
Si (%) <= C (%)×10.

2. The cast steel member according to Claim 1, comprising:
0.15 to 0.40% of C, 1.1% to 2.0% of Si, 0.5 to 1.5% of Mn, 0.5 to 1.5% of Cu, residual Fe and inevitable impurities, as represented by weight%.

3. The cast steel member according to Claim 1 or 2, wherein
an impact value (normal temperature) is 15 J/cm² or more, a tensile strength is 680 MPa or more to less than 1000 MPa, a 0.2% yield strength is 450 MPa or more, and an elongation is 12% or more.

4. The cast steel member according to any one of Claims 1 to 3, having a minimum thickness of 10 mm or less.

5. The cast steel member according to Claim 4, having a minimum thickness of 1 to 6 mm or less.

6. The cast steel member according to any one of Claims 1 to 5, which is as-cast.

7. The cast steel member according to any one of Claims 1 to 6, which is for an undercarriage.

8. The cast steel member according to Claim 7, which is formed into a steering knuckle.
